# EUROPÄISCHE PATENTANMELDUNG

(11) **EP 3 495 174 A1**
(43) Veröffentlichungstag der Anmeldung: **12.06.2019**
(21) Anmeldenummer: 18213513.7
(22) Anmeldetag: 11.04.2014
(51) Int. Cl.: B60D 1/46

(54) **HÖHENVERSTELLBARE ZUGDEICHSEL**

(30) Priorität: 12.04.2013 DE 202013101562 U
(62) Teilanmeldung aus: 14721225.2
(71) Anmelder: AL-KO SAS, 71500 Branges (FR)
(72) Erfinder: Bestler, Wolfgang, 89343 Jettingen-Scheppach (DE); Compain, Bernard, 71290 Loisy (FR); Kuckenburg, Roland, 86470 Thannhausen (DE)
(74) Vertreter: Ernicke, Klaus Stefan

(57) **Zusammenfassung**

Die Erfindung betrifft eine höhenverstellbare Zugdeichsel (1) mit einem Zugholm (5) und mit zwei miteinander schwenkbar verbundenen Deichselarmen (7,8). Zwischen dem Zugholm (5) und den Deichselarmen (7,8) ist ein Adapter (6) angeordnet, der mit dem unteren Deichselarm (7) an einer einzelnen Lagerstelle (9) schwenkbar verbunden ist, wobei die Lagerstelle (9) am Adapter (6) mit Distanz oberhalb und vor dem vorderen Holmende (16) des Zugholms (5) angeordnet ist. Die Zugdeichsel (1) weist ein Stützrad (15) und/oder einen Handbremshebel (42) auf, die am Adapter (6) angeordnet ist/sind.

## Beschreibung

Die Erfindung betrifft eine höhenverstellbare Zugdeichsel für Anhänger mit den Merkmalen im Oberbegriff des Hauptanspruchs.

Eine solche höhenverstellbare Deichsel ist aus der EP 0 326 570 B1 bekannt. Sie weist einen am vorderen Ende schräg aufwärts gebogenen Zugholm und zwei schwenkbar miteinander verbundene Deichselarme auf, wobei der untere doppelarmige Deichselarm am Zugholm schwenkbar gelagert ist. Die Deichsel weist ferner ein am Zugholm befestigtes Stützrad und eine Bremseinrichtung mit einer Auflaufbremse am oberen Deichselarm und einem Handbremshebel auf, der am Schwenklager zwischen dem Zugholm und dem unteren Deichselarm angeordnet und gelagert ist.

Eine andere höhenverstellbare Deichsel ist aus der DE 297 12 236 U1 bekannt.

Aus der Praxis und der DE 196 35 794 A1 sind ferner höhenverstellbare Deichseln mit zwei schwenkbar miteinander verbundenen Deichselarmen bekannt, bei denen der untere Deichselarm als Parallellenker mit vier Lagerstellen ausgebildet und am Zugholm gelagert ist.

Es ist Aufgabe der vorliegenden Erfindung, eine verbesserte höhenverstellbare Zugdeichsel aufzuzeigen.

Die Erfindung löst diese Aufgabe mit den Merkmalen im Hauptanspruch.
Die beanspruchte höhenverstellbare Zugdeichsel hat den Vorteil einer einfacheren und kostengünstigeren Bauweise. Außerdem ermöglicht der Adapter eine kompaktere Bauweise mit verkürzter Deichsellänge und einem verkürzten Abstand zu einem am Zugholm abgestützten Aufbau eines Fahrzeugs.

Die beanspruchte Zugdeichsel ermöglicht einen Anbau eines Stützrades und/oder eines Handbremshebels am Adapter, was zur Verkürzung der Gesamtlänge der Zugdeichsel von Vorteil ist. Außerdem ergeben sich bessere und kostengünstigere Anbaumöglichkeiten.

Die beanspruchte Zugdeichsel hat außerdem einen größeren Verstellbereich der mehreren, bevorzugt zwei, Deichselarme. Durch den Adapter kann der damit verbundene erste Deichselarm eine kürzere Baulänge aufweisen, was der Verstellkinematik zu Gute kommt. Der obere bzw. vordere Deichselarm kann in abgesenkter Position fluchtend zum Zugholm ausgerichtet werden. Dies ist günstig für ein Verbinden des am Deichselarm angeordneten Zugmittels mit einer tiefliegenden Fahrzeugkupplung. Die beanspruchte Zugdeichsel kann andererseits bedarfsweise noch weiter nach unten und in eine tiefere Ankuppelposition unterhalb des Zugholms bewegt werden. Der obere Deichselarm kann dank der Verstellkinematik in allen Höhenlagen des Zugmittels eine horizontale Ausrichtung behalten. Ebenso kann der Zugholm in allen Höhenlagen des Zugmittels in einer horizontale Ausrichtung gebracht werden.

Die beanspruchte Zugdeichsel hat ferner den Vorteil, dass sie in den verschiedenen Stellungen die Bodenfreiheit nicht beeinträchtigt. Hierbei ist es günstig, wenn der Tragarm des Adapters und der untere Deichselarm im wesentlichen die gleiche Länge aufweisen. Ferner kann die Zugdeichsel in der oberen und der unteren Zugmittelstellung im wesentlichen die gleiche Länge haben. Auch in den Zwischenstellungen ändert sich die Deichsellänge nicht wesentlich. Dies ist für die Deichselstabilität und das Fahrverhalten des Fahrzeugs vorteilhaft.

Weitere Vorteile sind eine verbesserte Steifigkeit der beanspruchten höhenverstellbaren Zugdeichsel und eine verbesserte Wirtschaftlichkeit.

Vorteilhafterweise können die Deichselarme als Einzelarme ausgebildet und über jeweils einzelne Lagerstellen, vorzugsweise Schwenklager, untereinander sowie mit dem Adapter verbunden sein. Dies gibt vielfältige individuelle Einstellmöglichkeiten für die Zugdeichsel. An den Lagerstellen können Fixiereinrichtungen einer Verstelleinrichtung angreifen.

Ferner kann die Gestaltung der Deichselarme vereinfacht werden und Kostenvorteile bringen. Weitere Vorteile liegen in der einfachen Integrationsmöglichkeit einer Auflaufbremse in dem oberen und bevorzugt rohrförmigen Deichselarm sowie einer verbesserten und vereinfachten Verlegung eines Bremszugs, an dem auch der Handbremshebel angreifen kann.

Die beanspruchte gehäuseartige Ausbildung des Adapters hat einerseits Vorteile für dessen Steifigkeit sowie für den Herstellaufwand und die Kosten. Andererseits können ein Stützrad oder ein anderes Fahrzeugteil und ein Handbremshebel ohne gegenseitige Beeinträchtigung an unterschiedlichen Seiten des Adapters angebaut werden. Ein bisher notwendiger Axialversatz dieser Teile mit entsprechender Vergrößerung der Deichsellänge ist entbehrlich.

Zudem lässt sich durch diese Adapterausbildung der Bremszug leichter verlegen und führen, wobei der Handbremshebel innerhalb eines Hohlraums des gehäuseartigen Adapters und damit an geschützter Stelle am Bremszug angreifen kann.

Weitere vorteilhafte Ausgestaltungen der Erfindung sind in den Unteransprüchen angegeben.

Ferner sind folgende Ausgestaltungen der Erfindung von Vorteil. Sie können einzeln oder in Kombination eingesetzt werden.

Der innere und von Seitenwänden begrenzte Hohlraum des zumindest bereichsweise gehäuseartig ausgebildeten Adapters kann ggf. im oberen und im frontseitigen Adapterbereich durch eine Querwandung begrenzt sein.

Die mehreren, insbesondere zwei, Deichselarme der Zugdeichsel können miteinander über eine einzelne Lagerstelle verbunden sein. Die Lagerstelle und die Lagerstelle zwischen dem Adapter und dem unteren Deichselarm können jeweils als Schwenklager ausgebildet sein. Die Verstelleinrichtung kann an diesen Lagerstellen angeordnete Fixiereinrichtungen aufweisen.

Die mehreren, insbesondere zwei, Deichselarme der Zugdeichsel können jeweils als Einzelarme ausgebildet sein.

Der Tragarm des Adapters und der untere Deichselarm können im wesentlichen die gleiche Länge aufweisen.

Die Bremseinrichtung an der Zugdeichsel kann eine am oberen Deichselarm angeordnete Auflaufbremse mit einem Bremszug aufweist, der durch den Hohlraum im Adapter in den hohlen Zugholm geführt ist.

Der obere Deichselarm kann einen Rohrkörper zur Aufnahme der Auflaufbremse und ein Stützteil für den seitlich am Rohrkörper angeordneten Bremszug aufweisen.

Der Zugholm kann rohrförmig ausgebildet sein. Er kann am vorderen Holmende eine Montageeinrichtung zur ggf. verstellbaren Befestigung des Adapters, insbesondere seines Stützteils, aufweisen.

Die Erfindung ist in den Zeichnungen beispielsweise und schematisch dargestellt. Im einzelnen zeigen:
- Figur 1:: eine Seitenansicht eines Fahrzeugs mit einer höhenverstellbaren Deichsel sowie einem Stützrad,
- Figur 2:: eine vergrößerte und abgebrochene andere Seitenansicht der Zugdeichsel von Figur 1,
- Figur 3 und 4:: Seitenansichten der Zugdeichsel von Figur 1 und 2 in einer anderen Höheneinstellung,
- Figur 5:: eine Draufsicht auf die Zugdeichsel gemäß Pfeil V von Figur 2,
- Figur 6:: eine Frontansicht der Zugdeichsel gemäß Pfeil VI von Figur 2 und
- Figur 7 und 8:: eine Variante der Zugdeichsel von Figur 1 bis 6 in Draufsicht und Seitenansicht.

Die Erfindung betrifft eine höhenverstellbare Zugdeichsel (1) für Fahrzeuge (2), insbesondere Anhänger. Die Erfindung betrifft ferner ein mit einer solchen Zugdeichsel (1) ausgerüstetes Fahrzeug, insbesondere einen Anhänger (2).

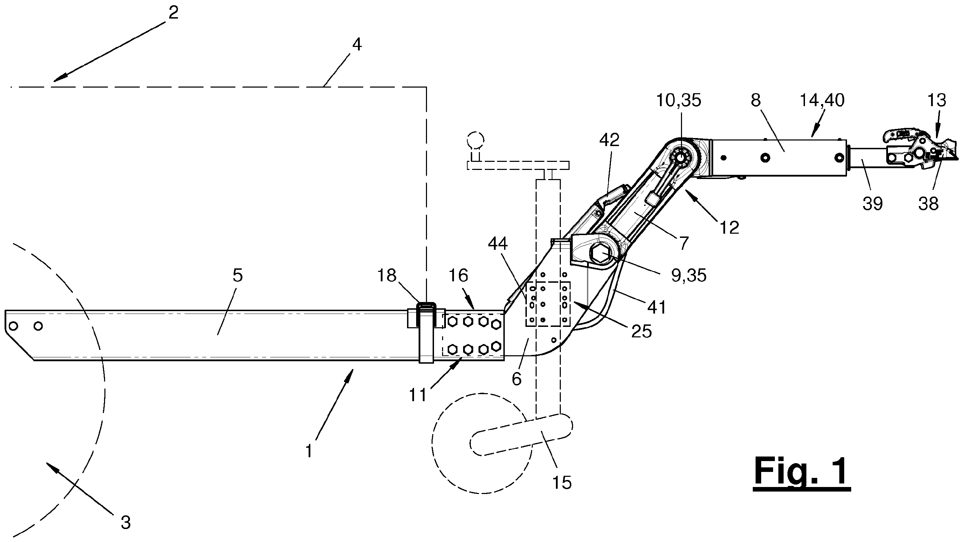

Figur 1 zeigt in einer Seitenansicht eine erste Variante der Zugdeichsel (1) und Teile eines Anhängers (2). Der Anhänger (2) weist ein Fahrgestell (3) mit ein oder mehreren Achsen sowie Rädern und mit einem Aufbau (4) auf. Ferner kann ein Stützrad (15) vorgesehen sein. Diese Teile sind in Figur 1 gestrichelt dargestellt.

Die höhenverstellbare Deichsel (1) weist einen Zugholm (5), einen Adapter (6) und mehrere, miteinander schwenkbar verbundene Deichselarme (7,8) auf. Vorzugsweise sind zwei Deichselarme (7,8) mit einer Verbindungs- und Lagerstelle (10) vorhanden. Deren Zahl kann jedoch auch größer sein. Die Zugdeichsel (1) weist ferner ein frontseitiges Zugmittel (13) zur Verbindung mit einem Zugfahrzeug (nicht dargestellt) auf. Das Zugmittel (13) kann am oberen oder vorderen Deichselarm (8) angeordnet sein.

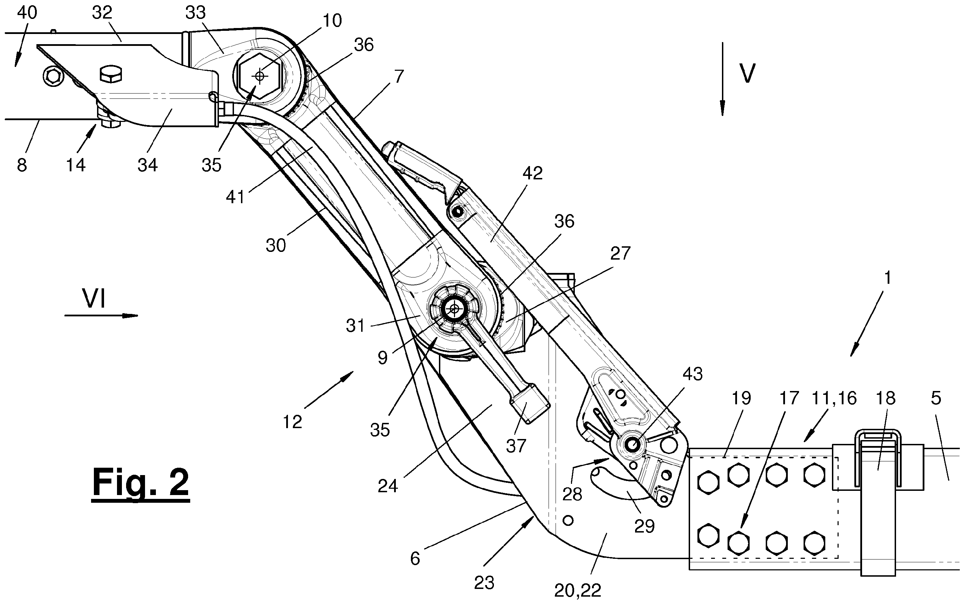

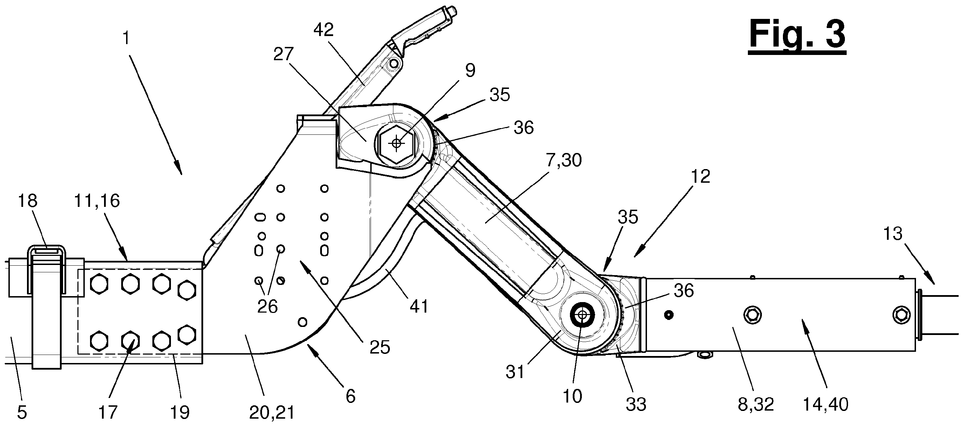

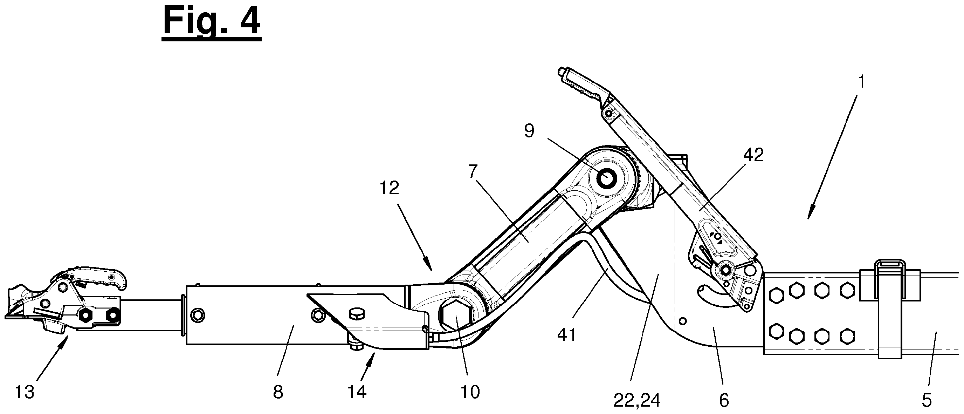

Der Zugholm (5) ist am hinteren Ende mit dem Fahrgestell (3) verbindbar bzw. verbunden. Der Zugholm (5) ist bevorzugt als Hohlkörper ausgebildet, wobei er z.B. eine Rohrform oder die Form eines umgedrehten U-Profils mit nach unten weisender Öffnung haben kann. Er ist in den Ausführungsbeispielen von Figur 1 bis 6 als gerader Einzelholm, z.B. als sog. Rohrdeichsel, ausgeführt. Er kann alternativ eine andere Formgebung haben.

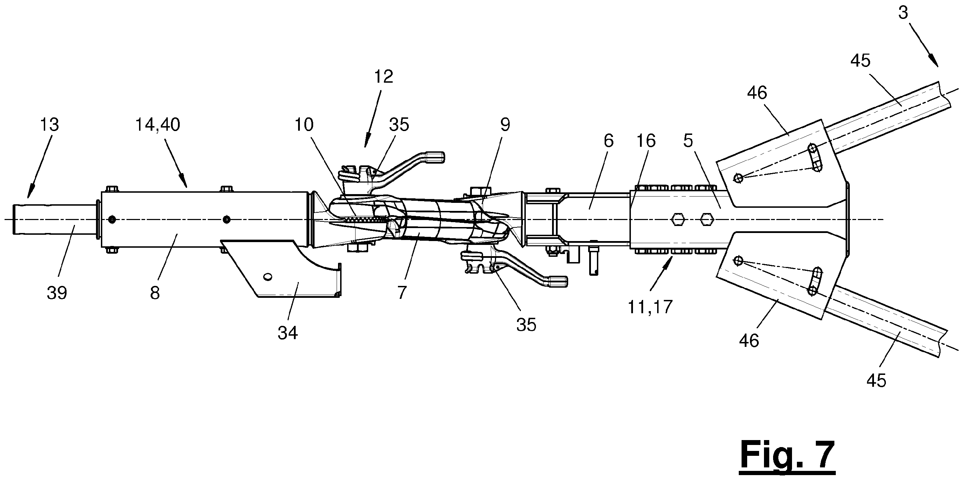

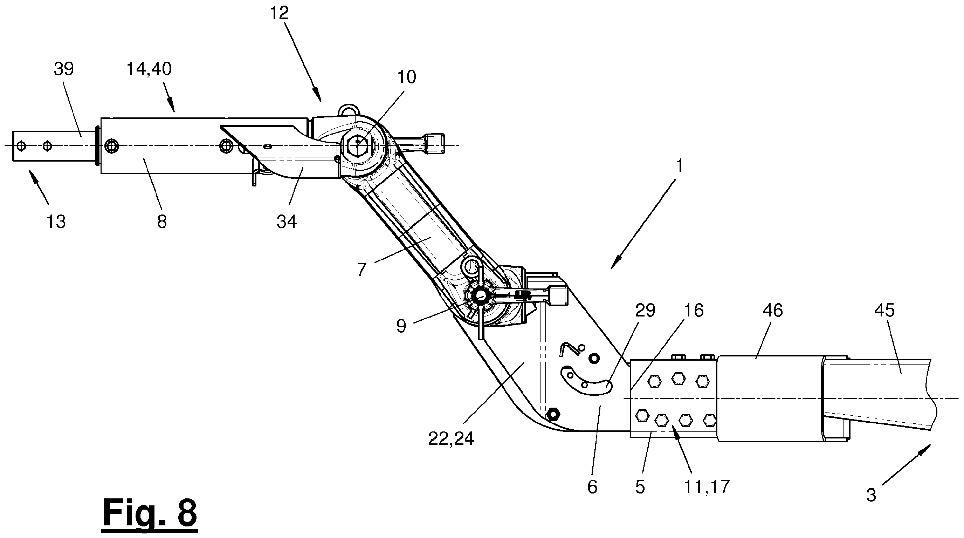

Figur 7 und 8 zeigen eine zweite Variante der Zugdeichsel (1), die hier als starre V-Deichsel ausgebildet ist. Sie weist zwei schräg aufeinander zulaufende Deichselholme (45) auf, die beidseits an den zentralen Zugholm (5) anschließen und hier mit Holmanschlüssen (46) starr oder ggf. verstellbar befestigt sind. Die Deichselholme (45) können die vorderen Enden von Längsträgern des Fahrgestells (3) sein. Der Zugholm (5) hat in diesen Ausführungsbeispielen eine kürzere Länge als bei der ersten Variante von Figur 1 bis 6 und der dort gezeigten Rohrdeichsel. Ansonsten kann die Formgebung des Zugholms (5) in allen Ausführungsbeispielen die Gleiche sein.

In einer anderen, nicht dargestellten Ausführungsform, kann ein Zugholm (5) direkt an einem Fahrgestell (3) angebaut sein, welches z.B. als Rechteckrahmen ausgebildet ist. Daneben sind weitere Konstruktionsvarianten der Zugdeichsel (1) möglich.

Wie Figur 1 bis 4 im Vergleich verdeutlichen, kann die Zugdeichsel (1) mit ihrem Zugmittel (13) auf verschiedene Höhen zum Ankuppeln an unterschiedlich hohe Fahrzeugkupplungen eingestellt werden. Dies erfolgt durch Verdrehung und Verstellung der Deichselarme (7,8) relativ zueinander und relativ zum Zugholm (5) bzw. zum Adapter (6). Mittels einer Verstelleinrichtung (12) können die verschiedenen Deichselstellungen arretiert werden.

Die Zugdeichsel (1) kann ferner eine Bremseinrichtung (14) aufweisen, die mit den nicht dargestellten Radbremsen des Fahrzeugs (2), insbesondere Anhängers, verbunden ist. Die Bremseinrichtung (14) kann eine Betriebsbremse mit einer am oberen Deichselarm (8) angeordneten und mit dem Zugmittel (13) verbundenen Auflaufbremse (40) aufweisen, die mit einem Bremszug (41) verbunden ist, der entlang der Deichselarme (7,8) bis zum Zugholm (5) verlegt und dort weiter geführt ist. Die Bremseinrichtung (14) kann zusätzlich oder alternativ eine Feststellbremse mit einem Handbremshebel (42) aufweisen, der mittels eines Hebellagers (43) am Adapter (6) schwenkbar gelagert ist und der ebenfalls am Bremszug (41) angreifen kann.

Das Zugmittel (13) weist einen geeigneten und ggf. veränderbaren oder wechselbaren Zugkopf (38) auf, der am vorderen Ende einer Zugstange (39) angeordnet ist, die ihrerseits mit dem oberen Deichselarm (8) und bei Existenz einer Bremseinrichtung (14) mit der Auflaufbremse (40) verbunden oder deren Bestandteil ist. Der Zugkopf (38) kann z.B. gemäß der gezeigten Ausführungsbeispiele als Kugelkopfkupplung mit Kupplungsschale und Kupplungsmechanik ausgebildet sein. Alternativ ist eine Ausbildung als Zugöse oder in anderer geeigneter Weise möglich. Der Zugkopf (38) kann bei Fehlen einer Auflaufbremse (40) direkt am oberen Deichselarm (8) fest oder ggf. wechselbar befestigt sein.

Der Adapter (6) ist zwischen dem Zugholm (5) und den Deichselarmen (7,8) angeordnet. Er ist dabei mit dem Zugholm (5) an dessen vorderem Holmende (16) starr verbunden. An dieser Befestigungsstelle (11) kann eine Montageeinrichtung (17) angeordnet sein, die ggf. eine Verstellung des Adapters (6) gegenüber dem Zugholm (5) oder auch einen Wechsel des Adapters (6) ermöglicht. Die Befestigung kann z.B. mittels mehrerer Schrauben nebst Durchgangsbohrungen am Holmende (16) und am Adapter (6) erfolgen. Die Bohrungen können als Bohrungsregister mit Verstellmöglichkeiten ausgeführt sein.

Nahe am vorderen Holmende (16) und der Montageeinrichtung (17) kann außerdem ein Anbaubeschlag (18) am Zugholm (5) angeordnet sein, an dem der in Figur 1 angedeutete Aufbau (4) abgestützt und befestigt werden kann. Der Anbau (4) kann mit seiner Vorderkante weit über den Zugholm (5) und bis knapp vor das vordere Holmende (16) reichen.

Wie Figur 1 verdeutlicht, können das Stützrad (15) (oder ein anderes Fahrzeugteil) und der Handbremshebel (42) am Adapter (6) angeordnet sein. Eine Anordnung ist an gegenüberliegenden Seiten und in etwa auf gleicher axialer Höhe möglich, so dass in Längsrichtung Platz gespart und die Deichsellänge verkürzt werden kann. Das Stützrad (15) (oder ein anderes Fahrzeugteil) und der Handbremshebel (42) haben einen axialen Abstand zum vorderen Holmende (16) und genügend Freiraum zur vorgezogenen Aufbaufront (4) .

Der Adapter (6) ist mit dem unteren Deichselarm (7) an einer Lagerstelle (9) schwenkbar verbunden. Dies ist vorzugsweise eine einzelne Lagerstelle. Die Lagerstelle (9) kann als Schwenklager mit einer einzelnen querliegenden Lagerachse ausgebildet sein. Der Adapter (6) ist derart ausgebildet, dass die Lagerstelle (9) mit Distanz oberhalb des Zugholms (5) und der Befestigungsstelle (11) angeordnet ist. Der Höhenversatz kann beträchtlich sein und kann z.B. 15 cm oder mehr betragen. Die besagte Lagerstelle (9) ist in den gezeigten Ausführungsformen außerdem mit axialer Distanz vor dem vorderen Holmende (16) bzw. vor der Befestigungsstelle (11) des Adapters (6) angeordnet. Dank des Adapters (6) kann der Höhenversatz größer und der Axialversatz kleiner als bei dem vorbekannten gebogenen Zugholm sein.

In dem axialen Zwischenraum zwischen der Lagerstelle (9) und der Befestigungsstelle (11) ist am Adapter (6) ein seitlicher vorbereiteter Anbaubereich (25) für das Stützrad (15) oder ein anderes Fahrzeugteil angeordnet. Dieser Anbaubereich (25) ist vorzugsweise eben ausgebildet und im wesentlichen senkrecht ausgerichtet. Er kann ein oder mehrere Montagemittel (26) aufweisen, an denen ein Montagebeschlag (44) des Stützrads (15) in geeigneter Weise befestigt werden kann. Die Montagemittel (26) können z.B. als Durchgangsbohrung ausgebildet sein, wobei diese in einem Bohrungsregister mit Verstellmöglichkeiten für den Montagebeschlag (44) angeordnet sein können. Das Stützrad (15) lässt sich hierdurch in verschiedenen Höhenlagen und ggf. auch verschiedenen Axiallagen montieren.

Der Adapter (6) weist auf der dem Anbaubereich (25) gegenüberliegenden Seite eine Lageraufnahme (28) für den Handbremshebel (42) und für dessen Hebellager (43) auf. Außerdem kann der Adapter (6) in diesem Bereich eine Ausnehmung (29) aufweisen, die einen Durchgriff eines Teils des Handbremshebels (42) und den Zugriff zu einem Bremszug (41) ermöglicht.

Der Adapter (6) weist von der Seite gesehen eine gebogenen bzw. abgewinkelte Form auf, wobei er sich von der Befestigungsstelle (11) aus schräg nach oben erstreckt. Der Biegewinkel des Adapters (6) kann z.B. zwischen 100° und 150°, vorzugsweise zwischen 120° und 130° liegen. Dies ist für den vorgenannten Höhen- und Axialversatz der Lagerstelle (9) günstig.

Der Adapter (6) besitzt am unteren bzw. hinteren Bereich ein Stützteil (19), welches zur Verbindung mit dem Zugholm (5) und der Montageeinrichtung (17) vorgesehen ist. Das Stützteil (19) kann an die Formgebung des Zugholms (5) am vorderen Holmende (16) angepasst sein. Zumindest am vorderen Holmende (16) ist ein Hohlraum ausgebildet, in den das angepasste Stützteil (19) eingesteckt und dort formschlüssig geführt werden kann. Das Stützteil (19) kann hierfür eine entsprechend geeignete profilierte Formgebung aufweisen. Die Querschnittsgestaltung von Holmende (16) und Stützteil (19) kann kreisrund, oval oder prismatisch sein.

Der Adapter (6) weist ferner einen Tragarm (20) auf, der vom Stützteil (19) ausgehend nach vorn und schräg nach oben absteht. Der Tragarm (20) trägt am oberen Ende eine bevorzugt schalenförmige Lageraufnahme (26) für die Bildung der Lagerstelle (9) des unteren Deichselarms (7). Am Tragarm (20) sind außerdem der Anbaubereich (25) und die Lageraufnahme (28) für den Handbremshebel (42) angeordnet.

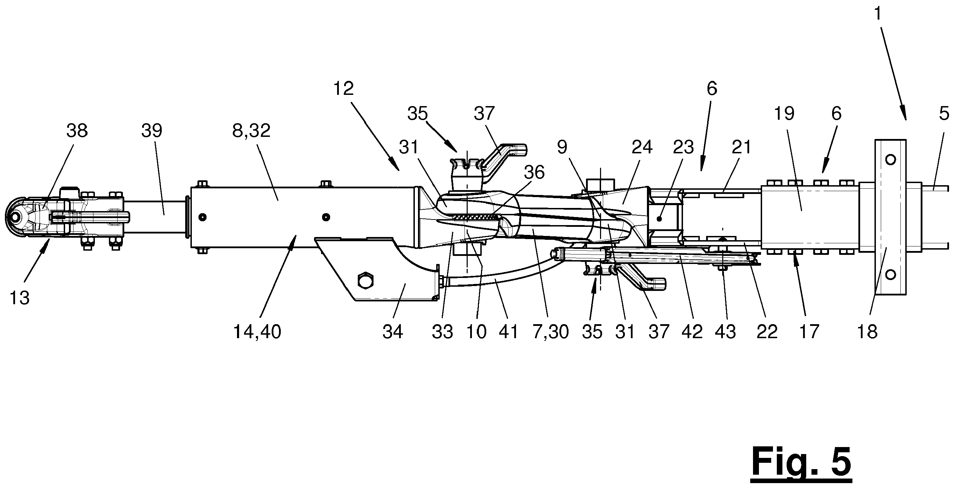

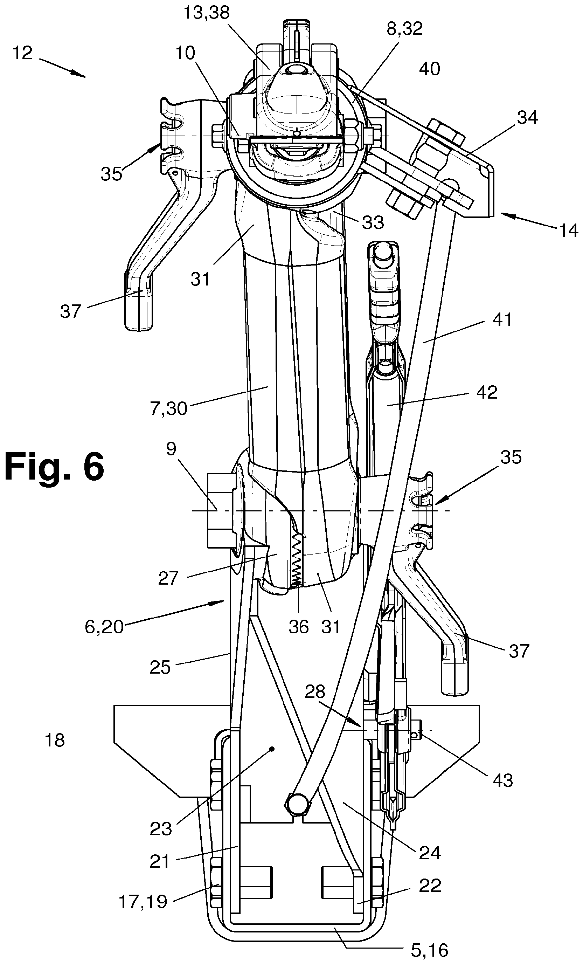

Wie Figur 5 und 6 verdeutlichen, weist der Adapter (6) eine zumindest bereichsweise gehäuseartige Ausbildung mit einem inneren Hohlraum (23) auf, der von den Seitenwänden (21, 22) begrenzt wird. Diese gehäuseartige Ausbildung kann einerseits im Bereich des Stützteils (19) vorhanden sein. Sie kann andererseits auch im Bereich des Tragarms (20) bestehen. Der Adapter (6) besteht bevorzugt aus Metall, insbesondere Blech, und kann als kostengünstiges Blechbiegeteil oder alternativ in anderer Weise, z.B. als Schweißkonstruktion, ausgeführt sein.

Der Adapter (6) kann im Bereich des Tragarms (20) eine eingezogene und nach oben sich einseitig oder beidseitig verjüngende Querschnittsform aufweisen. Die Seitenwände (21,22) sind im unteren Adapterbereich bzw. Tragarmbereich voneinander seitlich distanziert und im oberen Adapterbereich bzw. Tragarmbereich an der besagten Lagerstelle (9) für den unteren Deichselarm (7) aneinander angenähert und können sich dort berühren.

Im unteren Adapterbereich begrenzen die Seitenwände (21,22) den dortigen Hohlraum (23) seitlich. Der Hohlraum (23) kann ferner im oberen und im frontseitigen Adapterbereich durch eine Querwandung (24) zumindest bereichsweise begrenzt sein. Die Querwandung (24) kann ggf. durch eine entsprechende gebogene Formgebung von einer oder beiden Seitenwänden (21,22) oder durch zusätzlich eingezogene Streben oder dergleichen gebildet sein. Die Querwandung (24) ist mit den Seitenwänden (21,22) verbunden und versteift den gehäuseartigen Adapter (6). Der Anbaubereich (25) und die Lageraufnahme (28) sind an jeweils einer Seitenwand (21,22) angeordnet. In diesem Bereich sind die Seitenwände (21,22) seitlich voneinander distanziert.

In den gezeigten Ausführungsbeispielen hat die Seitenwand (21) des Tragarms (20) im Anbaubereich (25) eine im wesentlichen ebene Form und vertikale Ausrichtung. Die andere Seitenwand (22) ist im vorderen Bereich abgekantet, wobei sie einerseits eine schräge Querwand (24) bildet und sich andererseits im Bereich der Lagerstelle (9) an die Seitenwand (21) annähert und anschmiegt.

Der Adapter (6) weist an der Lagerstelle (9) für den unteren Deichselarm (7) eine schalenförmige Lageraufnahme (27) auf. Diese kann durch Verformung von einer oder beiden Seitenwänden (21,22) oder auf andere Weise, z.B. durch Anschweißen eines Lagerteils, gebildet werden.

Die Deichselarme (7,8) sind untereinander durch eine Lagerstelle (10) schwenkbar verbunden. Dies ist ebenfalls eine einzelne Lagerstelle. Sie ist auch als Schwenklager mit einer horizontalen Lagerachse ausgebildet. Die Deichselarme (7,8) sind in den gezeigten Ausführungsbeispielen als Einzelarme ausgebildet. Die einzelnen Lagerstellen (9,10) bieten voneinander unabhängige Schwenk- und Einstellmöglichkeiten für die Deichselarme (7,8).

Der Tragarm (20) des Adapters (6) und der untere Deichselarm (7) können in etwa die gleiche Länge aufweisen. Durch den schräg aufwärts gerichteten Tragarm (20) und den entsprechenden Höhenversatz der unteren Lagerstelle (9) kann der untere Deichselarm (7) eine kürzere Länge als beim Stand der Technik aufweisen. Durch den Adapter (6), insbesondere seinen Tragarm (20) und die erhabene Position der Lagerstelle (9), ergeben sich günstige Verstellmöglichkeiten für den unteren Deichselarm (7) und den damit verbundenen oberen Deichselarm (8). Figur 1 bis 4 zeigen hierbei verschiedene Knickstellungen der Zugdeichsel (1) und entsprechende gegenseitige Schwenkstellungen der Deichselarme (7,8).

Der untere oder erste Deichselarm (7) weist einen durch Profilierung versteiften Armkorpus (30) auf, der auch als Hohlkörper ausgebildet sein kann und der eine gerade längliche Form aufweist. An beiden Korpusenden sind Lageraufnahmen (31) seitlich angeordnet, die zur Bildung der Lagerstellen (9,10) dienen und die nach unterschiedlichen Richtungen weisen. Die Lagerstellen (31) können eine Schalenform haben.

Auch der obere oder zweite Deichselarm (8) weist am hinteren Ende eine Lageraufnahme (33) zur Bildung der Lagerstelle (10) auf, die bevorzugt eine Schalenform hat. Die besagten Schalenformen der Lageraufnahmen (27,31,33) dienen der gegenseitigen Abstützung und Führung der verbundenen Teile (6,7,8) und sind konzentrisch zur jeweiligen Lagerachse ausgerichtet.

Der Deichselarm (8) kann als Hohlkörper, insbesondere als Rohrkörper (32), ausgebildet sein und im hohlen Innenraum die Auflaufbremse (40), insbesondere deren Kartusche nebst Dämpfer und Feder, aufnehmen. Der Deichselarm (8) kann ferner ein seitlich abstehendes Stützteil (34), z.B. einen angeschweißten Stützflügel, aufweisen, der das obere Ende des Bremszuges (41) aufnehmen und stützen sowie nach oben abdecken kann. In den gezeigten Ausführungsbeispielen ist am Stützteil (34) außerdem ein außenliegendes Teil der Auflaufbremse (40), z.B. ein Umlenkhebel, schwenkbar gelagert und mit dem Bremszug (41) verbunden. Der Stützbeschlag (34) deckt auch eine Mantelöffnung im Rohrkörper (32) für den Durchgriff des Umlenkhebels zu den anderen Teilen der Auflaufbremse (40) ab.

Die eingangs genannte Verstelleinrichtung (12) weist an den Lagerstellen (9,10) angeordnete Fixiereinrichtungen (35) auf, die eine Einzelarretierung der Schwenkstellung an jeder Lagerstelle (9,10) ermöglichen. Die Fixiereinrichtungen (35) können in beliebig geeigneter Weise ausgebildet sein. In den gezeigten Ausführungsbeispielen sind sie als Spanneinrichtungen ausgeführt, die jeweils einen mit Zähnen oder anderen Vorsprüngen ausgerüsteten Spannkranz (36) an den Lageraufnahmen (27,31,33) und einen Spannhebel (37) aufweisen, welcher an dem jeweiligen, an den Lagerstellen (9,10) durchgesteckten Lagerbolzen angreift und die Spannkränze (36) in formschlüssigen Sperreingriff spannt. An der unteren Lagerstelle (9) ist der Spannhebel (37) auf der Seite des Handbremshebels (42) angeordnet. Bei der oberen Lagerstelle (10) ist deren Anordnung umgedreht.

Die zweite Variante der Zugdeichsel von Figur 7 und 8 unterscheidet sich von der ersten Variante vor allem durch die Deichselform, insbesondere V-Deichsel. Die Ausbildung des Adapters (6), der Deichselarme (7,8) und der anderen Komponenten der Zugdeichsel (1) kann ansonsten die gleiche wie bei der ersten Variante von Figur 1 bis 6 sein.

Abwandlungen der gezeigten und beschriebenen Ausführungsformen sind in verschiedener Weise möglich. Insbesondere können die Merkmale der Ausführungsbeispiele untereinander beliebig ausgetauscht und kombiniert werden. Eine Bremseinrichtung (14), insbesondere eine Betriebsbremse, kann entfallen. Die konstruktive Ausbildung des Adapters (6) sowie der Deichselarme (7,8) kann variieren. Der Adapter (6) kann im Bereich des Stützteils (19) und/oder des Tragarms (20) massiv ausgebildet sein. Er kann insbesondere als metallisches Gussteil ausgeführt sein. Die Deichselarme (7,8) können als Doppelarme ausgeführt sein, die bevorzugt jeweils gemeinsame, einzelne Lagerstellen (9,10) und Lagerachsen haben. Hierbei werden bevorzugt auch die Verstelleinrichtung (12) mit den an jeder Lagerstelle (9,10) angeordneten Fixiereinrichtungen (35) beibehalten. Die Doppelarme unterscheiden sich insoweit von den eingangs genannten Parallellenkern, die jeweils unterschiedliche, eigene Lagerstellen haben.

Die Höhenverstellbarkeit der Zugdeichsel bringt den Vorteil, dass einerseits eine horizontale Lage des oberen Deichselarms unabhängig von der Höhenlage eines Zugmittels bzw. einer fahrzeugseitigen Anhängekupplung sichergestellt werden kann. Dies ist insbesondere dann wichtig, wenn eine Auflaufbremse vorhanden ist, deren Auflaufeinrichtung im Bereich des oberen Deichselarms in eine horizontale Lage (bspw. +/- 3° gegenüber der Horizontalen) gebracht werden muss. Andererseits kann der Zugholm und ein daran abgestützter Anhängeraufbau unabhängig von der Höhenlage eines Zugmittels stets horizontal ausgerichtet werden, um so eine ebene horizontale Abstützung der Ladung zu gewährleisten.

### BEZUGSZEICHENLISTE

- 1: Zugdeichsel
- 2: Fahrzeug, Anhänger
- 3: Fahrgestell
- 4: Aufbau
- 5: Zugholm, Zugrohr
- 6: Adapter
- 7: Deichselarm unterer
- 8: Deichselarm oberer
- 9: Lagerstelle, Schwenklager unten
- 10: Lagerstelle, Schwenklager oben
- 11: Befestigungsstelle
- 12: Verstelleinrichtung
- 13: Zugmittel
- 14: Bremseinrichtung
- 15: Stützrad
- 16: Holmende vorn
- 17: Montageeinrichtung
- 18: Anbaubeschlag
- 19: Stützteil
- 20: Tragarm
- 21: Seitenwand
- 22: Seitenwand
- 23: Hohlraum
- 24: Querwandung, Versteifung
- 25: Anbaubereich
- 26: Montagemittel, Bohrung, Register
- 27: Lageraufnahme für Deichselarm
- 28: Lageraufnahme für Handbremshebel
- 29: Ausnehmung für Handbremshebel
- 30: Armkorpus
- 31: Lageraufnahme
- 32: Rohrkörper
- 33: Lageraufnahme
- 34: Stützteil, Stützflügel
- 35: Fixiereinrichtung, Spanneinrichtung
- 36: Spannkranz
- 37: Spannhebel
- 38: Zugkopf, Kugelkopfkupplung, Zugöse
- 39: Zugstange
- 40: Auflaufbremse
- 41: Bremszug
- 42: Handbremshebel
- 43: Hebellager
- 44: Montagebeschlag
- 45: Deichselholm, Längsträger
- 46: Holmanschluss

## Patentansprüche

1. Höhenverstellbare Zugdeichsel mit einem Zugholm (5) und mehreren, insbesondere zwei, miteinander schwenkbar verbundenen Deichselarmen (7,8), wobei die Zugdeichsel (1) ein Stützrad (15) und/oder einen Handbremshebel (42) aufweist, **dadurch gekennzeichnet, dass** zwischen dem Zugholm (5) und den Deichselarmen (7,8) ein Adapter (6) angeordnet ist, wobei der Adapter (6) mit dem unteren Deichselarm (7) an einer einzelnen Lagerstelle (9) schwenkbar verbunden ist, die am Adapter (6) mit Distanz oberhalb des Zugholms (5) und mit axialer Distanz vor dem vorderen Holmende (16) des Zugholms (5) angeordnet ist und wobei das Stützrad (15) und/oder der Handbremshebel (42) am Adapter (6) angeordnet ist/sind.

2. Zugdeichsel nach Anspruch 1, **dadurch gekennzeichnet, dass** die Zugdeichsel (1) ein Zugmittel (13), eine Verstelleinrichtung für die Deichselarme (7,8) und ggf. eine Bremseinrichtung (14) aufweist.

3. Zugdeichsel nach Anspruch 1 oder 2, **dadurch gekennzeichnet, dass** der Adapter (6) einen vorbereiteten Anbaubereich (25) für ein Stützrad (15) oder ein anderes Fahrzeugteil aufweist.

4. Zugdeichsel nach einem der vorhergehenden Ansprüche, **dadurch gekennzeichnet, dass** der Adapter (6) eine Lageraufnahme (28) für den Handbremshebel (42) aufweist.

5. Zugdeichsel nach Anspruch 4, **dadurch gekennzeichnet, dass** der Anbaubereich (25) und die Lageraufnahme (28) für den Handbremshebel (42) an einander gegenüber liegenden Seiten des Adapters (6) angeordnet sind.

6. Zugdeichsel nach einem der vorhergehenden Ansprüche, **dadurch gekennzeichnet, dass** der Adapter (6) zumindest bereichsweise gehäuseartig ausgebildet ist und einen von Seitenwänden (21,22) begrenzten inneren Hohlraum (23) aufweist, wobei bevorzugt der Hohlraum (23) im oberen und im frontseitigen Adapterbereich durch eine Querwandung (24) begrenzt ist.

7. Zugdeichsel nach Anspruch 6, **dadurch gekennzeichnet, dass** die Seitenwände (21,22) im unteren Adapterbereich voneinander seitlich distanziert und im oberen Adapterbereich an der Lagerstelle (9) des unteren Deichselarms (7) aneinander angenähert sind.

8. Zugdeichsel nach einem der vorhergehenden Ansprüche, **dadurch gekennzeichnet, dass** der Adapter (6) an der Lagerstelle (9) des unteren Deichselarms (7) eine schalenförmige Lageraufnahme (27) aufweist.

9. Zugdeichsel nach einem der Ansprüche 3 bis 8, **dadurch gekennzeichnet, dass** der Anbaubereich (25) und die Lageraufnahme (28) für den Handbremshebel (42) an jeweils einer Seitenwand (21,22) angeordnet sind.

10. Zugdeichsel nach einem der vorhergehenden Ansprüche, **dadurch gekennzeichnet, dass** der Adapter (6) ein Stützteil (19) zur Verbindung mit dem Zugholm (5) und einen vom Stützteil (19) schräg nach oben abstehenden Tragarm (20) aufweist, der am oberen Ende eine Lageraufnahme (26) für die Lagerstelle (9) des unteren Deichselarms (7) aufweist.

11. Zugdeichsel nach einem der vorhergehenden Ansprüche, **dadurch gekennzeichnet, dass** der Tragarm (20) eine bereichsweise gehäuseartige Ausbildung mit dem inneren Hohlraum (23) und den distanzierten Seitenwänden (21,22) aufweist.

12. Zugdeichsel nach einem der vorhergehenden Ansprüche, **dadurch gekennzeichnet, dass** die Deichselarme (7,8) miteinander über eine einzelne Lagerstelle (10) verbunden sind, wobei die Lagerstellen (9,10) als Schwenklager ausgebildet sind und die Verstelleinrichtung (12) an den Lagerstellen (9,10) angeordnete Fixiereinrichtungen (35) aufweist.

13. Zugdeichsel nach einem der Ansprüche 2 bis 12, **dadurch gekennzeichnet, dass** die Bremseinrichtung (14) eine am oberen Deichselarm (8) angeordnete Auflaufbremse (40) mit einem Bremszug (41) aufweist, der durch den Hohlraum (23) im Adapter (6) in den hohlen Zugholm (5) geführt ist.

14. Zugdeichsel nach einem der vorhergehenden Ansprüche, **dadurch gekennzeichnet, dass** der Adapter (6), insbesondere die Seitenwand (22), im Bereich der Lageraufnahme (28) eine Ausnehmung (29) für den Durchgriff des Handbremshebels (42) in den Hohlraum (23) und zum Bremszug (41) aufweist.

15. Fahrzeug, insbesondere Anhänger, mit einem Fahrgestell (3) und einer verstellbaren Zugdeichsel (1), **dadurch gekennzeichnet, dass** die Zugdeichsel (1) nach mindestens einem der Ansprüche 1 bis 14 ausgebildet ist.
